# EUROPEAN PATENT APPLICATION

(11) **EP 1 577 858 A1**
(43) Date of publication of application: **21.09.2005**
(21) Application number: 05005788.4
(22) Date of filing: 17.03.2005
(51) Int. Cl.: G09F 3/02

(54) **Method and apparatus for checking product authenticity**

(30) Priority: 18.03.2004 IT MI20040524
(71) Applicant: EXPORT BOX MADEINITALY.COM S.R.L., 20123 Milano (IT)
(72) Inventor: Anselmi, Sergio, 20100 Milano (IT); Crippa, Giorgio, 20123 Milano (IT)
(74) Representative: Luppi, Luigi

(57) **Abstract**

A method for checking the authenticity of a product comprises: making visible an identifying code contained by a support associated with the product; checking by means of a computer network the authenticity of the identifying code; emitting, only in the event of positive detection of the authenticity of the code, a signal that the product has been recognised as authentic; disabling the identifying code after recognition of the authenticity of the product.

## Description

The invention relates to a system for checking that the indications affixed to products to indicate they originate from a given territorial environment, or from a set manufacturer, or from a group of manufacturers, are correct or however for giving the consumer a larger degree of guarantees of origin compared with products devoid of the industrial invention disclosed here.

The state of the art comprises anti-counterfeiting systems consisting of warranty seals, or labels, affixed to the product packages or directly to the products that provide an indication of the authenticity of the products and/or of the pristine state of the packages.

Electronic components (chips) are furthermore known that contain an identifying code of a set product to which they are applied.

Furthermore, these components require the use of special readers to be able to be interpreted and are therefore very complex to use.

Furthermore, the above components are potentially duplicatable and do not therefore provide a suitable guarantee against abusive and uncontrolled reproductions.

In particular, the visibility of the code on the label to be applied to the product in fact makes any code illegally reproducible and therefore any label and product associated with it.

An object of the invention is to find a system to check the authenticity of products that is more reliable than the known visible code systems.

A further object is to find a system for checking the authenticity of products that is simpler than the known systems.

Another object is to find a system for checking the authenticity of products that is universal, i.e. usable on any type of product.

Another further object is to find a system for checking the authenticity of products that is exploitable by a consumer who is located in any part of the world without it having to be provided with particularly sophisticated equipment.

Another object is to find a system for checking the authenticity of products that does not require the use of dedicated equipment.

Another further object is to find a system for checking the authenticity of products that provides the manufacturer with detailed information on the existence of counterfeit products and thus if necessary enables the manufacturer to take appropriate measures in his own commercial distribution chain.

In a first aspect of the invention, there is provided a method comprising:
- making visible an identifying code contained by a support associated with the product;
- checking, preferably by means of a computer network, the authenticity of the identifying code;
- emitting, only in the event of positive detection of the authenticity of the code, a signal that the product has been recognised as authentic.

In this way it is possible for a consumer to check the authenticity of the product that has been purchased from the normal sales network.

Furthermore, the system is very safe and reliable.

The invention can be better understood with reference to the enclosed drawing in which a non-limitative example of an embodiment is shown, in which:
Figure 1 is a schematic front view of a support displaying an identifying code;
Figure 2 is a block diagram of a test method of the authenticity of the products.

The consumer may above all highlight the preferably alphanumeric code, initially hidden on a label 1, or a card, or another support applied to the product, by removing a protective layer 2 that initially covered it, thereby hiding it. The above support is thus universal, i.e. it can be associated with any type of product.

It is important that the code, or at least a significant part of it, is not initially visible so that the consumer can check that the code remains secret until the moment in which it is used.

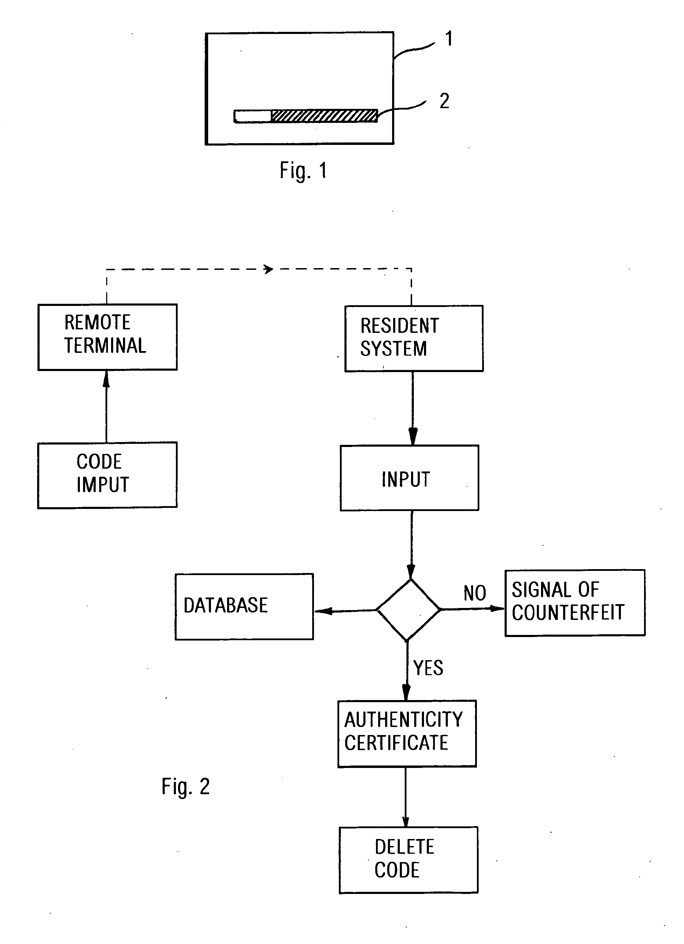

As shown in Figure 2, the consumer can enter the code as input into a remote terminal, for example a normal computer connected to the Internet or a cellular phone or another known communication system.

The code entered as an input is introduced into a resident system in which there is contained a database with all the correct identifying codes.

At this point, a special software program compares the identifying code entered as an input with the correct codes. If the identifying code entered as an input is not correct, the software program emits a failed recognition signal to warn the consumer in real time and possibly also the company that was supposed to be the manufacturer of the product that the purchased product is not original.

The checked codes will be stored in a suitable databank that will take account of the check, the expiry date of the certificate and of any other message deemed to be necessary concerning the code associated with the product.

If problems in the distribution chain of the products should occur, the purchaser of the codes to be associated with the products can ask for them to be suspended and in the event of a check request a suitable message can be inserted (for example, in the event of theft of a product, during checking of the code a message can be inserted' that notifies the consumer that he has purchased a previously stolen product).

This enables the security of the process of checking of the authenticity of a product to be maximised because one code can be used only for one product and is disabled when the authenticity of that product is checked.

If on the other hand the identifying code inserted as an input is correct, the software program emits a positive recognition signal to alert the consumer in real time that the purchased product is original.

Upon request, the software program can issue an authenticity certificate in the form of a directly printable file or a file that is deliverable to an e-mail address supplied by the consumer.

After making the positive identification, the software program disables the code the authenticity of which was positively checked previously in such a way that a further use of that code, which would be illegal, is not possible.

This enables the security of the process of checking the authenticity of a product to be maximised because a code can be used only for one product and is disabled when the authenticity of that product is checked.

It should be noted that the system for checking the authenticity of a product specified in the previous description can be implemented regardless of the location of the user and does not require the use of dedicated equipment.

## Claims

1. Method comprising:
- making visible an identifying code contained in a support associated with a product for which an authentication check is requested;
- checking the authenticity of the identifying code;
- emitting, only in the event of positive detection of the authenticity of the code, a signal that the product has been recognised as authentic.

2. Method according to claim 1, in which emitting said signal comprises making an authenticity certificate available.

3. Method according to claim 2, wherein said authenticity certificate is included in a directly printable electronic file.

4. Method according to claim 2, or 3, wherein said authenticity certificate is included in an electronic file sendable by e-mail to the consumer.

5. Method according to any preceding claim, wherein said checking comprises connecting to a computer network a computerised system managed by a consumer.

6. Method according to claim 2, wherein said checking comprises actuating a software program to compare said code with a database containing the possible valid identifying codes.

7. Method according to claim 6, wherein disabling a code, the authenticity of which has been positively checked, is provided for after said checking.

8. Method according to any preceding claim, wherein said making visible comprises removing a protective layer initially hiding said identifying code.

9. Method according to any preceding claim, wherein if the authenticity of said code is not checked, there is provided for sending a message of failure to check authenticity.

10. Method according to claim 9, wherein said sending a message of failed checking of authenticity comprises sending the consumer a message of failure to check authenticity.

11. Method according to claim 9, or 10, wherein said sending a message of failure to check authenticity comprises sending a message of failure to check authenticity to the company that is supposed to have been the manufacturer of said products.

12. Use of a support with a code covered by a protective removable layer as an element of a system for checking the authenticity of a product.

13. A computer program that incorporates the method according to one or more of claims 1 to 11.

14. A computer data support containing the program according to claim 13.
